(19) **Europäisches Patentamt / European Patent Office / Office européen des brevets**

(11) **EP 4 733 360 A1**

(12) **EUROPEAN PATENT APPLICATION**
published in accordance with Art. 153(4) EPC

(43) Date of publication:
**29.04.2026 Bulletin 2026/18**

(21) Application number: **24825752.9**

(22) Date of filing: **07.06.2024**

(51) International Patent Classification (IPC):
**C08L 101/00** (2006.01)      **B60C 1/00** (2006.01)
**C08K 3/06** (2006.01)      **C08K 3/011** (2018.01)
**C08K 5/10** (2006.01)      **C08L 21/00** (2006.01)

(52) Cooperative Patent Classification (CPC):
**B60C 1/00; C08K 3/011; C08K 3/06; C08K 5/10; C08L 21/00; C08L 101/00**

(86) International application number:
**PCT/JP2024/020882**

(87) International publication number:
**WO 2024/262346 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.06.2023 JP 2023102346**

(71) Applicant: **SHIKOKU CHEMICALS CORPORATION**
**Marugame-shi, Kagawa 763-8504 (JP)**

(72) Inventors:
• **UNESAKI, Shota**
**Ayauta-gun, Kagawa 769-0202 (JP)**
• **II, Yasuyuki**
**Ayauta-gun, Kagawa 769-0202 (JP)**
• **MIYAUCHI, Yukio**
**Ayauta-gun, Kagawa 769-0202 (JP)**
• **AMANO, Takashi**
**Ayauta-gun, Kagawa 769-0202 (JP)**
• **OTSUKA, Akihito**
**Ayauta-gun, Kagawa 769-0202 (JP)**

(74) Representative: **Studio Torta S.p.A.**
**Via Viotti, 9**
**10121 Torino (IT)**

(54) **VULCANIZING AGENT COMPOSITION AND PRODUCTION METHOD FOR SAME, RUBBER COMPOSITION AND PRODUCTION METHOD FOR SAME, AND VULCANIZED RUBBER AND PRODUCTION METHOD FOR SAME**

(57) The present invention provides a vulcanizing agent composition that is sufficiently superior in antistatic properties and combustion resistance properties, even though a sulfur is comprised as a vulcanizing agent component. The present invention relates to a vulcanizing agent composition comprising a sulfur and an alkyl ester of a saturated or unsaturated monovalent fatty acid.

EP 4 733 360 A1

**Description**

TECHNICAL FIELD

The present invention relates to a vulcanizing agent composition and its production method, a rubber composition and its production method, and a vulcanized rubber and its production method.

BACKGROUND ART

Sulfur is known as a vulcanizing agent used for rubber such as tires. Insoluble sulfur that is a type of sulfur is insoluble in carbon disulfide, is used as a vulcanizing agent for rubber. Compared to soluble sulfur, insoluble sulfur can suppress blooming, in which sulfur migrates to the surface of rubber and precipitates during the process from kneading with rubber to the end of vulcanization. For this reason, the insoluble sulfur is widely used as a vulcanizing agent, especially for radial tires (for example, Patent Document 1).

On the other hand, the insoluble sulfur has a low affinity for rubber and therefore the insoluble sulfur is generally poorly dispersible in rubber. This tendency is particularly strong when large amounts of insoluble sulfur are blended with rubber, resulting in the formation of insoluble sulfur agglomerates, which cause variations in rubber properties after vulcanization and lower quality rubber products. Therefore, insoluble sulfur is generally mixed with a process oil such as naphthenic oil, aromatic oil, or paraffinic oil to improve dispersing properties when mixed with rubber, and is used as so-called oil-treated insoluble sulfur. Similarly, sulfur other than insoluble sulfur is sometimes mixed with the process oil to improve the dispersing properties when used as a vulcanizing agent for rubber.

Sulfur belongs to a Class 2 hazardous material (flammable solid), and oils and fats used as a process oil belong to Class 4 hazardous materials (flammable liquids). However, the vulcanizing agent composition obtained by mixing insoluble sulfur (Class 2 hazardous) with naphthene oil (Class 4 hazardous) or coating insoluble sulfur with naphthene oil belongs to a non-dangerous solid. Thus, when sulfur is used as a vulcanizing agent for rubber, the sulfur is sometimes used by being mixed with a process oil from the viewpoint of making it non-hazardous.

In addition, sulfur such as insoluble sulfur is easily charged with static electricity, which causes adhesion to equipment and facilities and poor flowability due to contact and friction between sulfur particles or contact and friction with weighing equipment and kneading facilities when blending with rubber. Such adhesion to weighing equipment, etc., can lead to fluctuations in the amount of sulfur blended, which must be eliminated, thereby reducing workability and productivity. Especially in automatic weighing equipment, the use of sulfur, which is highly adhesive, often made handling difficult.

For example, Patent Document 1 describes that in a vulcanizing agent composition (oil-treated product) obtained by mixing insoluble sulfur with naphthenic process oil, the inclusion of dicyclopentadiene resin can reduce the adhesiveness of the vulcanizing agent composition to equipment and the like. In Patent Document 1, process oils for rubber such as vegetable oil-based (castor oil/rapeseed oil/ flaxseed oil/cottonseed oil/soybean oil/palm oil/coconut oil/rosin pine oil/tall oil), fatty acids and fatty acid derivatives are exemplified as a process oil.

For example, Patent Document 2 describes an insoluble sulfur composition comprising insoluble sulfur, a surfactant mainly consisting of sorbitan monolaurate, and process oil, which improves adhesion and flowability to equipment by preventing electrostatically-charging, and improves workability when mixing with rubber.

On the other hand, Patent Document 3 gives examples of powdered sulfur, precipitated sulfur, colloidal sulfur, surface-treated sulfur, insoluble sulfur, and nonstaining sulfur donors as sulfur used as a vulcanizing agent in hydrogenated chloroprene rubber composition. Hydrogenated chloroprene rubber compositions can be blended with a processing aid for rubber molding as needed, and fatty acid esters such as butyl stearate are examples of such a processing aid.

In recent years, there has been a growing demand for the use of recycled or biomass materials as raw materials for materials used in tires in order to become carbon neutral and sustainable.

PRIOR ART DOCUMENTS

PATENT DOCUMENTS

[Patent Document 1] WO2018/189878
[Patent Document 2] JP Patent Publication No. 2003-268240
[Patent Document 3] JP Patent Publication No. 2003-313367

# EP 4 733 360 A1

SUMMARY OF THE INVENTION

PROBLEMS TO BE SOLVED BY THE INVENTION

The inventors of the present invention have studied the vulcanizing agent composition obtained by mixing an insoluble sulfur with vegetable oils and fats (soybean oil, rapeseed oil, flaxseed oil, palm oil) as a process oil, and have found the following new issues:

The vulcanizing agent compositions using vegetable oils and fats as the process oil were highly electrically charged and the duration of combustion when ignited was much longer than that of the vulcanizing agent composition using naphthene oil as the process oil. The result of the long combustion-duration when ignited is different from the result expected from the fact that the flash point of naphthene oil is about 180°C, whereas the flash point of vegetable oils and fats is about 320°C. This was an unforeseen issue in the vulcanizing agent composition that use vegetable oils and fats as the process oil with the aim of making them sustainable.

The purpose of this invention is to provide a vulcanizing agent composition which is sufficiently superior in antistatic properties and combustion resistance properties, even though a sulfur is comprised as a vulcanizing agent component, and its producing method.

Specifically, the purpose of this invention is to provide a vulcanizing agent composition that, while containing a sulfur as a vulcanizing agent component, has reduced adhesion properties to equipment, etc., and has a short combustion duration when ignited and high safety properties.

It is also an object of the present invention to provide a rubber composition containing the above-mentioned vulcanizing agent composition and a method for producing the same, as well as a vulcanized rubber of the rubber composition and a method for producing the same.

SOLUTIONS TO THE PROBLEMS

The present invention relates to a vulcanizing agent composition comprising a sulfur and an alkyl ester of a saturated or unsaturated monovalent fatty acid.

The present invention also relates to a method for producing a vulcanizing agent composition characterized by mixing a sulfur with an alkyl ester of a saturated or unsaturated monovalent fatty acid.

The present invention also relates to a rubber composition comprising the above-mentioned vulcanizing agent composition and a rubber component.

The present invention also relates to a method for producing a rubber composition characterized by mixing the above-mentioned vulcanizing agent composition with a rubber component.

The present invention also relates to a vulcanized rubber of the above-mentioned rubber composition.

The present invention also relates to a method for producing a vulcanized rubber characterized by vulcanizing the above-mentioned rubber composition.

EFFECTS OF THE INVENTION

The vulcanizing agent composition of the present invention is sufficiently superior in antistatic properties and combustion resistance properties, even though it comprises a sulfur as a vulcanizing agent component.

DETAILED DESCRIPTION

[Vulcanizing agent composition]

The vulcanizing agent composition of the present invention comprises a sulfur and an alkyl ester of a saturated or unsaturated monovalent fatty acid.

The sulfur can be any sulfur used in the rubber field as a vulcanizing agent (or cross-linking agent) for rubber. Such a sulfur may be one or more selected from the group consisting of, for example, $S_8$ sulfur, cyclododecasulfur ($S_{12}$), insoluble sulfur, and mixtures thereof. From the viewpoint of further improving antistatic properties and combustion resistance properties, it is preferable for the sulfur to include one or more selected from the group consisting of $S_8$ sulfur, insoluble sulfur, and mixtures thereof, and it is more preferable for the sulfur to include insoluble sulfur.

$S_8$ sulfur means a cyclic allotrope of sulfur, in which eight sulfur atoms form a single allotrope ring, and is an inorganic compound (octathiocane) represented by the chemical formula $S_8$. $S_8$ sulfur is solid at normal temperature (25°C) and is usually readily soluble in carbon disulfide. In this specification, "readily soluble in carbon disulfide" means that the solubility in carbon disulfide at 25°C is at least 30% by weight. The solubility (weight %) is the ratio of solute to total amount (total amount of solvent and solute).

Cyclododecasulfur ($S_{12}$) is an inorganic compound (cyclododecasulfur) represented by the chemical formula $S_{12}$, meaning a cyclic allotrope of sulfur, in which 12 sulfur atoms form in a single allotrope ring. Cyclododecasulfur ($S_{12}$) is solid at normal temperature (25°C) and is usually insoluble in carbon disulfide.

Insoluble sulfur generally is the polymeric solid sulfur produced when sulfur that has been heated above the boiling point of sulfur, vaporized and quenched, or when molten sulfur having a temperature of 159°C or more is quenched, and means a sulfur that is insoluble in carbon disulfide at 25°C. The shape of the insoluble sulfur particles may be spherical or irregularly shaped. The term "insoluble in carbon disulfide" means that the solubility in carbon disulfide at 25°C is less than 1% by weight.

It is preferable that the sulfur comprises the insoluble sulfur. The insoluble sulfur usually has relatively low dispersibility in a rubber component. However, in the present invention, even if such an insoluble sulfur is used, the use of an alkyl ester of a saturated or unsaturated monovalent fatty acid, as described below, improves the dispersibility of the sulfur in the rubber component, and makes antistatic properties and combustion resistance properties of the vulcanizing agent composition sufficiently superior. When the vulcanizing agent composition contains the insoluble sulfur as a sulfur, blooming, in which the sulfur migrates to the surface of the rubber and precipitates in the vulcanized rubber, can be more effectively suppressed.

In this specification, the antistatic properties means properties of a vulcanizing agent composition that is difficult to be electrostatically charged. The vulcanizing agent composition are generally in powder form, and are easily charged with static electricity. Therefore, the vulcanizing agent composition may be often electrostatically charged by contact and friction between particles of the vulcanizing agent composition, or contact and friction with metering equipment and kneading facilities when blending with rubber. On the other hand, the vulcanizing agent composition of the present invention has excelent antistatic properties and is less likely to be electrostatically charged, so phenomena such as adhesion to equipment and facilities and reduced flowability due to electrostatically-charging can be more fully prevented. As a result, the vulcanizing agent composition can more fully prevent dust explosions. The combustion resistance properties means properties that the vulcanizing agent composition is difficult to ignite when in contact with a flame, and even if it does ignite and begin to burn, the burning does not continue and the flame is quickly extinguished by itself.

The average particle size of the sulfur is usually 0.1 to 300 $\mu$m, preferably 1 to 50 $\mu$m, more preferably 5 to 25 $\mu$m. The average particle size is the median diameter (D50), meaning the particle diameter at 50% integration in the particle size distribution measured using a particle size distribution measuring device based on a laser diffraction and scattering method.

The average particle size of the vulcanizing agent composition is approximately equivalent to the average particle size of the sulfur contained in the vulcanizing agent composition and is usually 0.1 to 300 $\mu$m, preferably 1 to 50 $\mu$m, more preferably 5 to 25 $\mu$m.

Alkyl ester of saturated or unsaturated monovalent fatty acid is that in which the carboxyl group of a saturated or unsaturated monovalent fatty acid forms an ester bond with an alkyl group. Fatty acid comprising the alkyl ester of saturated or unsaturated monovalent fatty acid may or may not have one or more (e.g., one to four, especially one to three) unsaturated bonds, such as double or triple bonds, in one molecule, or fatty acid may be a mixture thereof. The vulcanizing agent composition of the present invention is sufficiently superior in antistatic properties and combustion resistance properties due to the inclusion of the alkyl ester of saturated or unsaturated monovalent fatty acid. In detail, the vulcanizing agent composition of the present invention is sufficiently superior in antistatic properties, so that adhesion to equipment, etc., is more fully reduced and workability during rubber mixing is improved. The vulcanizing agent composition of the present invention is also sufficiently superior in combustion resistance properties, so that when ignited, the duration of combustion is sufficiently shorter and safty properties are sufficiently high. If the vulcanizing agent composition uses only naphthene oil and/or vegetable oils and fats traditionally used as a process oil in the rubber field instead of the alkyl ester of saturated or unsaturated monovalent fatty acid, the antistatic properties are reduced. Therefore, it may not be possible to sufficiently prevent adhesion to equipment, etc., and/or it may be necessary to prevent dust explosions. Moreover, in this case, combustion resistance properties may also be reduced.

In particular, with respect to the combustion resistance properties of the vulcanizing agent composition of the present invention, more specifically, the alkyl ester of saturated or unsaturated monovalent fatty acid exhibits a flash point (about -10 to 200°C) that is lower or comparable to that of vegetable oils and fats. Therefore, the vulcanizing agent composition of the present invention containing the sulfur and the alkyl ester of saturated or unsaturated monovalent fatty acid as a process oil are expected to have a longer or similar combustion duration when ignited than that of the vulcanizing agent composition containing vegetable oils and fats as a process oil. However, contrary to expectations, we found that the vulcanizing agent composition of the present invention has a significantly shorter combustion duration than that of the vulcanizing agent composition using vegetable oils and fats as a process oil. The mechanism is assumed to be due to the following reasons: The alkyl ester of saturated or unsaturated monovalent fatty acid is more volatile than vegetable oils and fats, preventing the surface temperature of the vulcanizing agent composition from rising and reaching the sulfur ignition point when the vulcanizing agent composition is brought close to the flame, and preventing oxygen in the air from being supplied to the ignition point.

The number of carbon atoms of a fatty acid constituting the alkyl ester of saturated or unsaturated monovalent fatty acid is not particularly limited and is usually from 10 to 30, preferably from 14 to 26, more preferably from 16 to 22, and especially more preferably from 16 to 18 from the viewpoint of further improving antistatic properties and combustion resistance properties. The number of carbon atoms in the fatty acid is the number of carbon atoms in the hydrocarbon chain constituting the fatty acid, including the carbon atoms constituting the carboxyl group.

The fatty acid constituting the alkyl ester of saturated or unsaturated monovalent fatty acid may be one or more compounds selected from the group consisting of, for example, decanoic acid, lauric acid, myristic acid, palmitic acid, stearic acid, oleic acid, linoleic acid, linolenic acid, arachidic acid, eicosadienoic acid, eicosatrienoic acid, arachidonic acid, eicosapentaenoic acid, behenic acid, erucic acid, docosahexaenoic acid, lignoceric acid, and mixtures thereof. Thus, the alkyl ester of saturated or unsaturated monovalent fatty acid may be one or more compounds selected from the group consisting of decanoic acid alkyl esters, lauric acid alkyl esters, myristic acid alkyl esters, palmitic acid alkyl esters, stearic acid alkyl esters, oleic acid alkyl esters, linoleic acid alkyl esters, linolenic acid alkyl esters, arachidic acid alkyl esters, eicosadienoic acid alkyl esters, eicosatrienoic acid alkyl esters, arachidonic acid alkyl esters, eicosapentaenoic acid alkyl esters, behenic acid alkyl esters, erucic acid alkyl esters, docosahexaenoic acid alkyl esters, lignoceric acid alkyl esters, and mixtures thereof.

The alkyl constituting the alkyl ester of saturated or unsaturated monovalent fatty acid may be, for example, methyl, ethyl, isopropyl, n-butyl, isobutyl, 2-ethylhexyl, or mixed groups thereof. Thus, the alkyl ester of saturated or unsaturated monovalent fatty acid may be one or more compounds selected from the group consisting of methyl esters of saturated or unsaturated monovalent fatty acids, ethyl esters of saturated or unsaturated monovalent fatty acids, isopropyl esters of saturated or unsaturated monovalent fatty acids, n-butyl esters of saturated or unsaturated monovalent fatty acids, isobutyl esters of saturated or unsaturated monovalent fatty acids, 2-ethylhexyl esters of saturated or unsaturated monovalent fatty acids, and mixtures thereof. The alkyl ester of saturated or unsaturated monovalent fatty acid preferably includes one or more compounds selected from the group consisting of methyl esters of saturated or unsaturated monovalent fatty acids, ethyl esters of saturated or unsaturated monovalent fatty acids, isopropyl esters of saturated or unsaturated monovalent fatty acids, n-butyl esters of saturated or unsaturated monovalent fatty acids, isobutyl esters of saturated or unsaturated monovalent fatty acids, and mixtures thereof, , and more preferrably includes methyl esters of saturated or unsaturated monovalent fatty acids, in view of further improving antistatic properties and combustion resistance properties.

Examples of the alkyl ester of saturated or unsaturated monovalent fatty acid include methyl decanoate, ethyl decanoate, isopropyl decanoate, n-butyl decanoate, isobutyl decanoate, 2-ethylhexyl decanoate, methyl laurate, ethyl laurate, isopropyl laurate, n-butyl laurate, isobutyl laurate, 2-ethylhexyl laurate, methyl myristate, ethyl myristate, isopropyl myristate, n-butyl myristate, isobutyl myristate, 2-ethylhexyl myristate, methyl palmitate, ethyl palmitate, isopropyl palmitate, n-butyl palmitate, isobutyl palmitate, 2-ethylhexyl palmitate, methyl stearate, ethyl stearate, isopropyl stearate, n-butyl stearate, isobutyl stearate, 2-ethylhexylstearate, methyl oleate, ethyl oleate, isopropyl oleate, n-butyl oleate, isobutyl oleate, 2-ethylhexyl oleate, methyl linoleate, ethyl linoleate, isopropyl linoleate, n-butyl linoleate, isobutyl linoleate, 2-ethylhexyl linoleate, methyl linolenate, ethyl linolenate, isopropyl linolenate, n-butyl linolenate, isobutyl linolenate, 2-ethylhexyl linolenate, arachidic acid methyl ester, arachidic acid ethyl ester, arachidic acid isopropyl ester, arachidic acid n-butyl ester, arachidic acid isobutyl ester, arachidic acid 2-ethylhexyl ester, eicosadienoic acid methyl ester, eicosadienoic acid ethyl ester, eicosadienoic acid isopropyl ester, eicosadienoic acid n-butyl ester, eicosadienoic acid isobutyl ester, eicosadienoic acid 2-ethylhexyl ester, eicosatrienoic acid methyl ester, eicosatrienoic acid ethyl ester, eicosatrienoic acid isopropyl ester, eicosatrienoic acid n-butyl ester, eicosatrienoic acid isobutyl ester, eicosatrienoic acid 2-ethylhexyl ester, arachidonic acid methyl ester, arachidonic acid ethyl ester, arachidonic acid isopropyl ester, arachidonic acid n-butyl ester, arachidonic acid isobutyl ester, arachidonic acid 2-ethylhexyl ester, eicosapentaenoic acid methyl ester, eicosapentaenoic acid ethyl ester, eicosapentaenoic acid isopropyl ester, eicosapentaenoic acid n-butyl ester, eicosapentaenoic acid isobutyl ester, eicosapentaenoic acid 2-ethylhexyl ester, behenic acid methyl ester, behenic acid ethyl ester, behenic acid isopropyl ester, behenic acid n-butyl ester, behenic acid isobutyl ester, behenic acid 2-ethylhexyl ester, erucic acid methyl ester, erucic acid ethyl ester, erucic acid isopropyl ester, erucic acid n-butyl ester, erucic acid isobutyl ester, erucic acid 2-ethylhexyl ester, docosahexaenoic acid methyl ester, docosahexaenoic acid ethyl ester, docosahexaenoic acid isopropyl ester, docosahexaenoic acid n-butyl ester, docosahexaenoic acid isobutyl ester, docosahexaenoic acid 2-ethylhexyl ester, lignoceric acid methyl ester, lignoceric acid ethyl ester, lignoceric acid isopropyl ester, lignoceric acid n-butyl ester, lignoceric acid isobutyl ester, lignoceric acid 2-ethylhexyl ester, and mixtures of two or more of these esters.

The alkyl ester of saturated or unsaturated monovalent fatty acid preferably includes the alkyl ester of saturated or unsaturated monovalent fatty acid that is in a liquid state at normal temperature (25°C). This is because an inclusion of such an alkyl ester of saturated or unsaturated monovalent fatty acid in the vulcanizing agent composition facilitates uniform mixing of sulfur with the alkyl ester of saturated or unsaturated monovalent fatty acid. Examples of the alkyl ester of saturated or unsaturated monovalent fatty acid that is in a liquid state at normal temperature include, for example, methyl oleate, ethyl oleate, methyl linoleate, ethyl linoleate, methyl linolenate and ethyl linolenate. Even if the alkyl ester of saturated or unsaturated monovalent fatty acid is in a liquid state at normal temperature, the vulcanizing agent composition of the present invention can maintain its powder form because the alkyl ester of saturated or unsaturated monovalent fatty acid is adsorbed on the sulfur particle surface.

In the alkyl ester of saturated or unsaturated monovalent fatty acid, the content ratio of the alkyl ester of saturated or unsaturated monovalent fatty acid that is in liquid state at normal temperature is not particularly limited. The content ratio may be, for example, 20% or more by weight, from the viewpoint of further improvement of antistatic properties and combustion resistance properties, may preferably be 40% or more by weight, more preferably 60% or more by weight with respect to total amount of the alkyl ester of saturated or unsaturated monovalent fatty acid. The upper limit of the content ratio is not particularly limited, and the content ratio is usually 100% by weight or less.

The alkyl ester of saturated or unsaturated monovalent fatty acid can be synthesized by the ester exchange reaction of monoglycerides, diglycerides, or triglycerides as a main component of oils and fats, with alkyl alcohols. Oils and fats include vegetable oils and fats and animal oils and fats. The vegetable oils and fats include soybean oil, rapeseed oil, flaxseed oil, palm oil, palm kernel oil, sunflower oil, rice oil, sesame oil, corn oil, coconut oil, safflower oil, safflower oil, peanut oil, cottonseed oil, mustard oil, pongamia oil, jatropha oil, mahua oil, and para rubber tree oil. Beef fat, pork fat, whale oil, fish oil, etc. can be listed as animal oils and fats. Among the vegetable oils and fats, pongamia oil, jatropha oil, mahua oil, and para rubber tree oil are generally not used for food and are considered as inedible oils.

The alkyl ester of saturated or unsaturated monovalent fatty acid can also be synthesized by the esterification reaction of saturated or unsaturated monovalent fatty acids with alkyl alcohols. As the saturated or unsaturated monovalent fatty acids, the fatty acids constituting the alkyl ester of saturated or unsaturated monovalent fatty acid as described above can be mentioned. The alkyl alcohols include methanol, ethanol, isopropyl alcohol, n-butyl alcohol, isobutyl alcohol, 2-ethylhexyl alcohol, or mixtures thereof.

Biodiesel (Bio Diesel Fuel; BDF) is a fuel synthesized from oils and fats derived from living organisms such as vegetable oils and fats and animal oils and fats. Biodiesel is, in detail, a mixture of the alkyl ester of saturated or unsaturated monovalent fatty acids obtained by esterification (especially methyl esterification with methanol) of vegetable oils and fats, animal oils and fats, and/or their waste edible oils as a source oil with alkyl alcohols. Biodiesel is also, in detail, a mixture of the alkyl ester of saturated or unsaturated monovalent fatty acid obtained by esterification (especially methyl esterification with methanol) with alkyl alcohols from fatty acids a source oil that are byproducts of the process of producing vegetable oils and fats (e.g. rice oil) from a vegetable oils and fats source (e.g. rice bran). The alkyl alcohol for the esterification of the source oil or the fatty acid may be, for example, methanol, ethanol, isopropyl alcohol, n-butyl alcohol, isobutyl alcohol, 2-ethylhexyl alcohol, or a mixture thereof. The present invention can contribute to sustainability and carbon neutrality by using the biodiesel, which mainly comprises the alkyl ester of saturated or unsaturated monovalent fatty acid obtained from vegetable oils and fats, animal oils and fats, and/or their waste edible oils as a raw material oil. In addition, the use of the biodiesel, which mainly comprises the alkyl ester of saturated or unsaturated monovalent fatty acid obtained from the fatty acids a source oil that are byproducts of the process of producing vegetable oils and fats from vegetable oils and fats source, can contribute to sustainability and carbon neutrality. Furthermore, the use of biomethanol (or bioethanol) made from raw materials derived from living organisms for methanol (or ethanol) during methyl esterification (or ethyl esterification) can further contribute to sustainability and carbon neutrality. From such viewpoints, the alkyl ester of saturated or unsaturated monovalent fatty acid is preferably derived from the biodiesel. The terms "the alkyl ester of saturated or unsaturated monovalent fatty acid is derived from the biodiesel" means that the alkyl ester of saturated or unsaturated monovalent fatty acid includes the alkyl ester of saturated or unsaturated monovalent fatty acid derived from the biodiesel. The alkyl ester of saturated or unsaturated monovalent fatty acid is preferably derived from vegetable oils and fats, animal oils and fats, and/or methyl-esterified products of their waste edible oils, is more preferably derived from vegetable oils and fats, and/or methyl-esterified products of waste edible oils of vegetable oils and fats and/or animal oils and fats, and is even more preferably derived from inedible oils, and/or methyl-esterified products of waste edible oils of vegetable oils and fats and/or animal oils and fats. For example, the alkyl ester of saturated or unsaturated monovalent fatty acid preferably includes vegetable oils and fats, animal oils and fats, and/or a methyl ester mixture of the saturated or unsaturated monovalent fatty acids obtained by methyl esterification of their waste edible oils, more preferably includes vegetable oils and fats, and/or a methyl ester mixture of the saturated or unsaturated monovalent fatty acids obtained by methyl esterification of waste edible oils of vegetable oils and fats or animal oils and fats,, and even more preferably includes nonedible oils , and/or a methyl ester mixture of the saturated or unsaturated monovalent fatty acids obtained by methyl esterification of waste edible oils of vegetable oils and fats and/or animal oils and fats.

The content ratio of the alkyl ester of saturated or unsaturated monovalent fatty acid in the vulcanizing agent composition is not particularly limited and is usually from 1 to 66 parts by weight with respect to 100 parts by weight of sulfur, preferably from 2 to 60 parts by weight, more preferably from 5 to 50 parts by weight, even more preferably from 8 to 40 parts by weight, and especially preferably from 10 to 30 parts by weight from the viewpoint of further improving antistatic properties and combustion resistance properties. When the vulcanizing agent composition contains one or more kinds of the alkyl ester of saturated or unsaturated monovalent fatty acid, their total content ratio should be within the above range.

The present invention does not prohibit the vulcanizing agent composition from further including a process oil conventionally used in the field of rubber (hereinafter simply referred to as "other process oil"). Such other process oil includes, for example, mineral oil-based oils (paraffinic process oil, naphthenic process oil, aromatic process oil, liquid paraffin, petrotum, gilsonite, petroleum asphalt); vegetable oils and fats (soybean oil, rapeseed oil, flaxseed oil, palm oil, palm kernel oil, sunflower oil, rice oil, sesame oil, corn oil, coconut oil, safflower oil, safflower oil, peanut oil, cottonseed oil, mustard oil, pongamia oil, jatropha oil, mahua oil); sub (faculties); and process oils for rubber such as fatty acids and fatty acid derivatives . The fatty acid derivatives are fatty acid derivatives other than the alkyl ester of saturated or unsaturated monovalent fatty acid as described above. Such fatty acid derivatives include, for example, monoacylglycerol, diacylglycerol, sorbitan fatty acid esters, ethylene glycol fatty acid esters, polyethylene glycol fatty acid esters, propylene glycol fatty acid esters, polyglycerol fatty acid esters, sucrose fatty acid esters, fatty acid amides, fatty acid chlorides, and aliphatic amines. The other process oil can be one or more of the above-mentioned process oils for rubber.

The content ratio of the other process oil in the vulcanizing composition is not particularly limited and is usually 66 parts by weight or less (especially from 0 to 66 parts by weight) with respect to 100 parts by weight of sulfur, preferably 50 parts by weight or less (especially from 0 to 50 parts by weight), more preferably 20 parts by weight or less (especially from 0 to 20 parts by weight), more preferably 10 parts by weight or less (especially from 0 to 10 parts by weight), sufficiently preferably 1 part by weight or less (especially from 0 to 1 part by weight), and more sufficiently preferably 0 part by weight.

The vulcanizing agent composition of the present invention may further contain one or more additives selected from vulcanization accelerators, stabilizers, antioxidants, dispersing aids, and vulcanization accelerating aids, as required.

The vulcanization accelerators include, for example, aldehyde-ammonia based compounds, aldehyde-amine based compounds, guanidine based compounds, thiourea based compounds, thiazole based compounds, sulfenamide based compounds, thiuram based compounds, thidio carbamate salt based compounds, xanthogenate salt based compounds, etc.. The content ratio of the vulcanization accelerator is not particularly limited and is usually 20 parts by weight or less (especially from 0 to 20 parts by weight) with respect to 100 parts by weight of sulfur, from the viewpoint of further improving antistatic properties and combustion resistance properties, is preferably 10 parts by weight or less (especially from 0 to 10 parts by weight), more preferably 5 parts by weight or less (especially from 0 to 5 parts by weight), and even more preferably 1 part by weight or less (especially from 0 to 1 part by weight). When the vulcanizing agent composition contains one or more types of vulcanization accelerators, their total content ratio should be within the above range.

The stabilizers include, for example, alpha-methylstyrene (alpha MS), bromine, iodine, potassium iodide, iron(III) chloride, nitric acid, ammonium persulfate, sodium ethyl xanthate, vinyl toluene, terpineol, and zinc sulfate. The content ratio of the stabilizer is not particularly limited and is usually 20 parts by weight or less (especially from 0 to 20 parts by weight) with respect to 100 parts by weight of sulfur, preferably 10 parts by weight or less (especially from 0 to 10 parts by weight), more preferably 5 parts by weight or less (especially from 0 to 5 parts by weight) and even more preferably 1 part by weight or less (especially 0 to 1 part by weight) from the viewpoint of further improving antistatic properties and combustion resistance properties When the vulcanizing agent composition contains one or more stabilizers, their total content ratio should be within the above range.

Examples of the antioxidants include amine-based antioxidants, phenol-based antioxidants, sulfur-based antioxidants, and phosphoric acid-based antioxidants. The content ratio of the antioxidants is not particularly limited and is usually 20 parts by weight or less (especially from 0 to 20 parts by weight) with respect to 100 parts by weight of sulfur, from the viewpoint of further improving antistatic properties and combustion resistance properties, preferably 10 parts by weight or less (especially from 0 to 10 parts by weight), more preferably 5 parts by weight or less (especially from 0 to 5 parts by weight), and more preferably 1 part by weight or less (especially from 0 to 1 part by weight)especially preferably 0.5 parts by weight or less (especially from 0 to 0.5 parts by weight). When the vulcanizing agent composition contains one or more antioxidants, their total content ratio should be within the above range.

The dispersing aids include, for example, silica. The content ratio of the dispersing aid is not particularly limited and is usually 20 parts by weight or less (especially from 0 to 20 parts by weight) with respect to 100 parts by weight of sulfur, preferably 10 parts by weight or less (especially from 0 to 10 parts by weight), more preferably 5 parts by weight or less (especially from 0 to 5 parts by weight), and even more preferably 1 part by weight or less (especially 0 to 1 part by weight) from the viewpoint of further improving antistatic properties and combustion resistance properties. When the vulcanizing agent composition contains one or more dispersing aids, their total content ratio should be within the above range.

The vulcanization accelerating aids include, for example, metal hydroxides such as magnesium hydroxide, calcium hydroxide, sodium hydroxide, lithium hydroxide, potassium hydroxide, copper hydroxide; metal oxides such as magnesium oxide, calcium oxide, zinc oxide, copper oxide; metal carbonates such as magnesium carbonate, calcium carbonate, sodium carbonate, lithium carbonate, potassium carbonate, etc. The content ratio of the vulcanization accelerating aids is not particularly limited and is usually 20 parts by weight or less (especially from 0 to 20 parts by weight) with respect to 100 parts by weight of sulfur, preferably 10 parts by weight or less (especially from 0 to 10 parts by weight), more preferably 5 parts by weight or less (especially from 0 to 5 parts by weight), and even preferably 1 part by weight or less (especially from 0 to 1 part by weight), and sufficiently preferably 0 parts by weight from the viewpoint of further improving antistatic properties and combustion resistance properties. When the vulcanizing agent composition contains one or more vulcanization accelerating aids, their total content ratio should be within the above range.

The vulcanizing agent composition of the present invention is useful as a vulcanizing agent for various rubber components. For example, the vulcanizing agent composition can be suitably used as a vulcanizing agent for producing rubber materials requiring high hardness (especially rubber for tires, seismic isolation rubber, vibration-damping rubber, conveyor belts, etc.).

[Method of Producing Vulcanizing agent composition]

The vulcanizing agent composition can be made by mixing the sulfur and the alkyl ester of saturated or unsaturated monovalent fatty acid and the additives as needed. The method of mixing is not limited, and may employ, for example, a method of mixing using a planetary mixer or other known mixing device, or may employ a method of mixing by hand rubbing (or hand mixing). For example, the sulfur, the alkyl ester of saturated or unsaturated monovalent fatty acid and the additives may be mixed in a polyethylene bag to a predetermined content ratio, sealed, and hand rubbed. The mixing time to obtain the vulcanizing agent composition is not particularly limited as long as uniform mixing is achieved, and may be from 1 minute to 1 hour, especially from 5 to 30 minutes.

From the standpoint of safety, it is preferable to conduct the production of the vulcanizing agent composition under an atmosphere of inert gases such as nitrogen and argon.

[Rubber Composition and Production Method thereof]

The present invention also provides a rubber composition. The rubber composition of the present invention contains the vulcanizing agent composition of the present invention as described above and a rubber component, and may further contain compounding agents such as reinforcing agents, anti-aging agents, softening agents, vulcanization accelerators, vulcanization accelerating aids, vulcanization retarders, colorants, foaming agents, dispersing agents, lubricants, and adhesion promoters as required. The rubber composition of the present invention means the rubber composition before vulcanization treatment. Therefore, the mixture obtained by kneading the vulcanizing agent composition and the rubber component, etc. at a temperature of below the vulcanization temperature are classified as a rubber composition because the mixture is in an un-vulcanized state. For example, a masterbatche is included in the concept of the "rubber composition". The master batch is, for example, a material in which, for a given product containing a given compounding agent, the compounding agent is precontained in the rubber component at a content greater than the content in the product.

The rubber component is not limited and includes, for example, Natural Rubber (NR), Butadiene Rubber (BR), Isoprene Rubber (IR), styrene-butadiene rubber (SBR), ethylene-propylene rubber (EPM, EPDM), butyl rubber (IIR), harogenated butyl rubber (X-IIR), Chloroprene Rubber (CR), silicone rubber (Q), fluoro-rubber (FKM), polysulfide rubber (T), chlorinated polyethylene (CPE), polyurethane (U), Hypalon, ethylene-vinyl acetate-acrylic ester rubber, epichlorohydrin rubber, and acrylic rubber. One rubber or a mixture of two or more rubbers of these can be used.

The amount of each of the rubber component and the vulcanizing agent composition of the present invention in the rubber composition is not particularly limited. The content ratio of the vulcanizing agent composition of the present invention is usually from 0.1 to 1000 parts by weight, preferably from 0.5 to 500 parts by weight, more preferably from 1 to 400 parts by weight, and even more preferably from 1 to 20 parts by weight, with respect to 100 parts by weight of the rubber component.

Examples of the reinforcing agents include talc, clay, carbon black, white carbon, graphite, calcium carbonate, magnesium carbonate, calcium silicate, etc. The reinforcing agents can also be referred to as fillers. The content ratio of the reinforcing agents is not particularly limited and is usually from 20 to 150 parts by weight with respect to 100 parts by weight of rubber component, preferably from 30 to 130 parts by weight, more preferably from 35 to 110 parts by weight from the viewpoints of hardness and low heat-generation properties of the rubber composition.

Anti-aging agents include, for example, amine-based compounds, quinolinebased compounds, quinone-based compounds, phenol-based compounds, imidazolebased compounds, sulfur-based compounds, and phosphorus-based compounds, as well as metal carbamate salts. The content ratio of the anti-aging agent is not particularly limited and is usually 0.1 to 11 parts by weight with respect to 100 parts by weight of the rubber component, preferably 0.3 to 8 parts by weight and more preferably 0.5 to 6 parts by weight in the view points of crack resistance properties and processability properties.

Examples of the softening agents include mineral oil-based compounds, vegetable oil-based compounds, synthetic resin-based compounds, dioctyl phthalate, and dioctyl sebacate. The softening agents s can also be referred to as plasticizers. The content ratio of the softening agents is not particularly limited and is usually from 0.5 to 60 parts by weight with respect to 100 parts by weight of rubber component, preferably from 1 to 50 parts by weight and more preferably from 2 to 40 parts by weight in the viewpoints of workability properties and flexibility properties of the rubber composition.

Examples of the vulcanization accelerators include guanidine-based compounds, aldehyde-amine-based compounds, aldehyde-ammonia-based compounds, thiazole-based compounds, sulfenamide-based compounds, thiourea-based compounds, dithiocarbamate-based compounds, and xanthate-based compounds. The content ratio of the vulcanization accelerators is not particularly limited and is usually 0.1 to 7 parts by weight with respect to 100 parts by weight of rubber component, preferably 0.3 to 5 parts by weight and more preferably 0.5 to 3 parts by weight in the viewpoints of low heat generation properties and crack resistance properties.

The vulcanization accelerating aids include, for example, metal hydroxides such as magnesium hydroxide, calcium hydroxide, sodium hydroxide, lithium hydroxide, potassium hydroxide, and copper hydroxide; metal oxides such as magnesium oxide, calcium oxide, zinc oxide, copper oxide; metal carbonates such as magnesium carbonate, calcium carbonate, sodium carbonate, lithium carbonate, potassium carbonate, etc. The content ratio of the vulcanization accelerating aids is not particularly limited and is usually from 1 to 18 parts by weight with respect to 100 parts by weight of rubber component, preferably from 3 to 15 parts by weight and more preferably from 5 to 12 parts by weight in the viewpoint of vulcanization acceleration.

Examples of the vulcanization retarders include phthalic anhydride, benzoic acid, salicylic acid, N-nitrosodiphenylamine, N-cyclohexylthiophthalimide, and N-(trichloromethylthio) benzenesulfonamide. The content ratio of the vulcanization retarders is not particularly limited and is usually from 0.01 to 3 parts by weight with respect to 100 parts by weight of rubber component, preferably from 0.05 to 2.5 parts by weight and more preferably from 0.1 to 2 parts by weight in the viewpoints of workability properties and rubber burn prevention.

As the colorants, one or more compounds of inorganic or organic pigments and dyes can be used. Examples of the colorants include, for example, iron oxide, aniline black, bone black (bone char), titanium white, phthalocyanine-based compounds, azo-based compounds, anthraquinone-based compounds, quinacridonebased compounds, isoindolinone-based compounds, dioxazine-based compounds, perylene-based compounds, quinophthalones-based compounds, perinones-based compounds, xanthenes-based compounds, cobalt blue, cobalt green, cobalt yellow, cadmium sulfide, cadmium selenide, ultramarine, rouge, chromium oxide, lead chromate, myrol blue, titanium yellow, nickel yellow, bismuth yellow, mica titanium, oil black, malachite green, rhodamine B, benzimidazolone-based compounds, and others. The content ratio of the colorants is not particularly limited and is usually from 0.01 to 50 parts by weight with respect to 100 parts by weight of the rubber component, from the viewpoint of appearance improvement, preferably from 0.01 to 30 parts by weight and more preferably from 0.01 to 10 parts by weight.

Examples of the foaming agents include, for example, azodicarbonamide (ADCA), dinitrosopentamethylenetetramine (DPT), dinitrosopentastylenetetramine or benzenesulfonylhydrazide derivatives, p,p'-oxybisbenzenesulfonylhydrazide (OBSH), ammonium bicarbonate, sodium bicarbonate, and ammonium carbonate, which produce carbon dioxide; nitrososulfonyl azo compounds, N,N'-dimethyl-N,N'-dinitrosophthalamide, which produce nitrogen, toluene sulfonyl hydrazide, p-toluenesulfonyl semicarbazide, p,p'-oxybisbenzenesulfonyl semicarbazide, and others. The ratio of the foaming agents is not particularly limited and is usually from 1 to 20 parts by weight with respect to 100 parts by weight of the rubber component, preferably from 3 to 18 parts by weight and more preferably from 5 to 15 parts by weight in the viewpoints of anti-slip properties.

Examples of the dispersing agents include, for example, silane coupling agents having sulfide, mercapto, thioester, vinyl or amino groups; silane coupling agents glycidoxy such as nitro or chloro silane coupling agents; polyalkylene glycols; amine-based compounds; silane-based compounds; epoxy-based compounds; and guanidine-based compounds, among others. The content ratio of the dispersing agent is not particularly limited and is usually 0.1 to 30 parts by weight with respect to 100 parts by weight of the reinforcing agents component, preferably 0.5 to 25 parts by weight and more preferably 1 to 20 parts by weight in the viewpoints of low heat generation properties and wear resistance properties.

Examples of the lubricants include, for example, higher fatty acid amides such as oleic amide, stearic amide, behenic amide, and ethylene bis-stearoid; saturated and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, nervonic acid; silicone oil, and higher fatty acid esters. The content ratio of the lubricants is not particularly limited and is usually from 0.5 to 15 parts by weight with respect to 100 parts by weight of rubber component, preferably from 1 to 13 parts by weight and more preferably from 2 to 10 parts by weight from the viewpoint of improving processability properties.

Examples of the adhesion promoters include, for example, cobalt organic acids such as cobalt naphthenate, cobalt stearate, cobalt neodecanoate, cobalt rosinate, cobalt versatic acid, cobalt tall oil acid, cobalt oleate, cobalt linoleate, cobalt linolenate, and cobalt palmitate; bismuth organic acid, aluminum organic acid, zinc organic acid, molybdenum organic acid, and iron organic acid. The content ratio of the adhesion promoters is not particularly limited and is usually 0.1 to 25 parts by weight with respect to 100 parts by weight of rubber component, preferably 0.3 to 20 parts by weight and more preferably 0.5 to 15 parts by weight in the viewpoints of adhesion properties between vulcanized rubber and metal.

When the rubber composition of the present invention is manufactured as a rubber composition for tires, sulfenamide-based compounds, etc. as vulcanization accelerators, zinc oxide, etc. as vulcanization accelerating aids, stearic acid, etc. as lubricants, carbon black, etc. as reinforcing agents, amine-based compounds, etc. as anti-aging agents, mineral oil-based oils, etc. as softening agents are preferred.

The rubber composition of the present invention may be produced by mixing the vulcanizing agent composition and the rubber component and the compounding agents included as required, or by kneading the mixture at a temperature of below the vulcanization temperature. The mixing method for obtaining the rubber composition is not limited, and known mixing devices such as planetary mixers may be used. The mixing time to obtain the rubber composition is not limited as long as uniform mixing is achieved, and may be from 1 minute to 1 hour, especially from 5 to 30 minutes. The kneading method for obtaining the rubber composition is not particularly limited, for example, kneaders, Banbury mixers, etc.; open rolls, etc. may be used. The kneading temperature for obtaining the rubber composition is below the vulcanization temperature, is not particularly limited and may be, e.g., 130°C or less (especially from 50 to 130°C), preferably from 70 to 110°C, more preferably from 80 to 100°C. The kneading time to obtain the rubber composition is not particularly limited and may be, for example, from 10 seconds to 20 minutes, preferably from 1 to 10 minutes.

[Vulcanized rubber and Production Method thereof]

The present invention also provides a vulcanized rubber. The vulcanized rubber of the present invention is a vulcanized rubber of the rubber composition of the present invention as described above and, in detail, is a vulcanized rubber obtained by vulcanizing the rubber composition of the present invention as described above. In more detail, the vulcanized rubber can be obtained by vulcanizing the rubber composition of the present invention at a suitable vulcanization temperature according to the type and blending ratio of each component. Vulcanization can be performed, for example, at 150 to 170°C for 1 to 30 minutes.

The vulcanized rubber of the present invention has good mechanical properties (e.g., tensile strength, tensile elongation and the like) both before and after an aging test. The aging test is a test in which a vulcanized rubber is left under harsh conditions, e.g., at 70°C for four days in order to promote a progression of aging.

The present invention encompasses the following suitable aspects.

<1> A vulcanizing agent composition, comprising a sulfur and an alkyl ester of a saturated or unsaturated monovalent fatty acid.

<2> The vulcanizing agent composition as described in <1>, wherein the alkyl ester is one or more compounds selected from the group consisting of methyl esters of saturated or unsaturated monovalent fatty acids, ethyl esters of saturated or unsaturated monovalent fatty acids, isopropyl esters of saturated or unsaturated monovalent fatty acids, n-butyl esters of saturated or unsaturated monovalent fatty acids, isobutyl esters of saturated or unsaturated monovalent fatty acids, 2-ethylhexyl esters of saturated or unsaturated monovalent fatty acids, and mixtures thereof.

<3> The vulcanizing agent composition as described in <1> or <2>, wherein the alkyl ester includes an alkyl ester that is in a liquid state at normal temperature.

<4> The vulcanizing agent composition as described in any of <1> to <3>, wherein the fatty acid constituting the alkyl ester is one or more compounds selected from the group consisting of saturated or unsaturated monovalent fatty acids having from 14 to 26 carbon atoms.

<5> The vulcanizing agent composition as described in any of <1> to <4>, wherein the alkyl ester is one or more compounds selected from the group consisting of palmitic acid alkyl esters, stearic acid alkyl esters, oleic acid alkyl esters, linoleic acid alkyl esters, linolenic acid alkyl esters, behenic acid alkyl esters, and mixtures thereof.

<6> The vulcanizing agent composition as described in any of <1> to <5>, wherein the alkyl ester is derived from biodiesel.

<7> The vulcanizing agent composition as described in any of <1> to <6>, wherein the alkyl ester is derived from vegetable oils and fats, animal oils and fats, and/or methyl-esterified products of waste edible oils thereof.

<8> The vulcanizing agent composition as described in any of <1> to <7>, wherein the sulfur is one or more selected from the group consisting of $S_8$ sulfur, cyclododecasulfur ($S_{12}$), insoluble sulfur, and mixtures thereof.

<9> The vulcanizing agent composition as described in any of <1> to <8>, wherein the alkyl ester is comprised in a ratio of 1 to 66 parts by weight with respect to 100 parts by weight of the sulfur.

<10> The vulcanizing agent composition as described in any of <1> to <9>, further comprising one or more additives selected from vulcanization accelerators, stabilizers, antioxidants, dispersing aids and vulcanization accelerating aids.

<11> A method for producing a vulcanizing agent composition, characterized by mixing a sulfur and an alkyl ester of a saturated or unsaturated monovalent fatty acid.

<12> A vulcanizing agent composition produced by the production method described in <11>.

<13> A rubber composition, comprising the vulcanizing agent composition as described in any one of <1> to <10> and <12> and a rubber component.

<14> The rubber composition as described in <13>, wherein the content ratio of the vulcanizing agent composition is 0.1 to 1000 parts by weight with respect to 100 parts by weight of the rubber component.

<15> A method for producing a rubber composition, characterized in that the vulcanizing agent composition described in any one of <1> to <10> and <12> and a rubber component are mixed.

<16> A vulcanized rubber of the rubber composition as described in <13> or <14>.

<17> The vulcanized rubber according to <16>, wherein the vulcanized rubber is a rubber for tires.

<18> A method for producing a vulcanized rubber, characterized by vulcanizing the rubber composition described in <13> or <14>.

EXAMPLES

[Raw materials]

<Sulfur>

- Insoluble sulfur: product name "Muocron" (average particle size 20 $\mu$m) manufactured by Shikoku Kasei Kogyo Co.
- $S_8$: Product name "Sulfur, powder" manufactured by FUJIFILM Wako Pure Chemicals Co.
- $S_{12}$: cyclododecasulfur ($S_{12}$) was synthesized by the method described in JP Patent Publication 2019-512443.

<Processed oil>

(Naphthene oil)

- Naphthene oil A: Diana Process Oil manufactured by Idemitsu Kosan Co.
- Naphthene oil B: Product name "SUNTHENE" manufactured by Japan Sun Oil Co.

(Vegetable oils and fats)

- Soybean oil: manufactured by Nisshin Oillio Co., product name: "Soybean White strained Oil
- Rapeseed oil: manufactured by Nisshin Oillio Co., product name "rapeseed white strained oil
- Flaxseed oil: manufactured by Nisshin Oillio Co., product name "N/B flaxseed oil
- Palm oil: manufactured by Nisshin Oillio Co., product name "Refined palm kernel oil"

(Alkyl esters of saturated or unsaturated monovalent fatty acids)

- Methyl palmitate: Reagent made by Tokyo Kasei Kogyo, product name "methyl palmitate" (solid at normal temperature (25°C))
- Methyl stearate: Reagent made by Tokyo Kasei Kogyo, product name "methyl stearate" (solid at normal temperature (25°C))
- Methyl Oleate: Reagent made by Tokyo Kasei Kogyo, product name "methyl oleate" (liquid at normal temperature (25°C))
- Methyl linoleate: Reagent made by Tokyo Kasei Kogyo, product name "methyl linoleate" (liquid at normal temperature (25°C))
- Methyl linolenate: Reagent made by Tokyo Kasei Kogyo, product name "methyl linolenate" (liquid at normal temperature (25°C))
- Methyl behenate: Reagent manufactured by Tokyo Kasei Kogyo, product name "methyl behenate" (solid at normal temperature (25°C))
- Ethyl Oleate: Reagent made by Tokyo Kasei Kogyo, product name "ethyl oleate" (liquid at normal temperature (25°C))

- Ethyl linoleate: Reagent made by Tokyo Kasei Kogyo, product name "ethyl linoleate" (liquid at normal temperature (25°C))
- Biodiesel A: Product name "D-OiLN (without antioxidant)" (liquid at normal temperature (25°C)), manufactured by Daiki-Axis, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from waste edible oil. The product described above is used as the biodiesel A, and since the saturated or unsaturated monovalent fatty acids are derived from waste edible oil at the time of production of said product, as described above, said biodiesel A is also derived from waste edible oil.
- Biodiesel B: Product name "D-OiLN" manufactured by Daiki-Axis (liquid at normal temperature (25°C)), content of alkyl esters of saturated or unsaturated monovalent fatty acids: 96.5% or more; where the alkyl esters of saturated or unsaturated monovalent fatty acids are the same as the alkyl esters of saturated or unsaturated monovalent fatty acids in biodiesel A. Biodiesel B contains antioxidant. In addition, the saturated or unsaturated monovalent fatty acids are derived from waste edible oil. The product described above is used as the biodiesel B, and since the saturated or unsaturated monovalent fatty acids are derived from waste edible oil at the time of production of said product, as described above, said biodiesel B is also derived from waste edible oil.
- Biodiesel C: Product name "TOSOLV-ME" (liquid at normal temperature (25°C)), manufactured by TOSHIN Yushi, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from soybean oil. Biodiesel C is a mixture of alkyl esters of saturated or unsaturated monovalent fatty acids obtained by esterification of soybean oil as a raw material with methanol.
- Biodiesel D: Product name "TOSOLV-RBP" (liquid at normal temperature (25°C), manufactured by TOSHIN Yushi; content of alkyl esters of saturated or unsaturated monovalent fatty acids: 96.5% or more; where the alkyl esters of saturated or unsaturated monovalent fatty acids are n-butyl esters of saturated or unsaturated monovalent fatty acids whose fatty acids have 16 to 18 carbon atoms. In addition, the saturated or unsaturated monovalent fatty acids are derived from rice oil. Biodiesel D is a mixture of alkyl esters of saturated or unsaturated monovalent fatty acids obtained by esterification of fatty acids as raw materials, which are byproducts of the rice oil production process from rice bran, with n-butyl alcohol.
- Biodiesel E: Product name "TOSOLV-RO" (liquid at normal temperature (25°C)), manufactured by TOSHIN Yushi, content of alkyl esters of saturated or unsaturated monovalent fatty acids: 96.5% or more; where the alkyl esters of saturated or unsaturated monovalent fatty acids are 2-ethylhexyl esters of saturated or unsaturated monovalent fatty acids whose fatty acids have 16 to 18 carbon atoms. In addition, the saturated or unsaturated monovalent fatty acids are derived from rice oil. Biodiesel E is a mixture of alkyl esters of saturated or unsaturated monovalent fatty acids obtained by esterification of fatty acids as raw materials, which are byproducts of the rice oil production process from rice bran, with 2-ethylhexyl alcohol.
- Biodiesel F: Product name "Fine Ester R-1000" (liquid at normal temperature (25°C)), manufactured by Miyoshi Oil and Fat Co., content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from rice oil. Biodiesel F is a mixture of alkyl esters of saturated or unsaturated monovalent fatty acids obtained by esterification of fatty acids as raw materials, which are byproducts of the rice oil production process from rice bran, with methanol.
- Biodiesel G: Product name "TFE-ME" (liquid at normal temperature (25°C)) manufactured by Tsuno Oleochemicals, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from waste edible oil. The product described above is used as the biodiesel G, and since the saturated or unsaturated monovalent fatty acids are derived from waste edible oil at the time of production of said product, as described above, said biodiesel G is also derived from waste edible oil.
- Biodiesel H: Product name "TFE-MED" (liquid at normal temperature (25°C)) manufactured by Tsuno Oleochemicals, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms In addition, the saturated or unsaturated monovalent fatty acids are derived from waste edible oil. The product described above is used as the biodiesel H, and since the saturated or unsaturated monovalent fatty acids are derived from waste edible oil at the time of production of said product, as described above, said biodiesel H is also derived from waste edible oil.
- Biodiesel I: Product name "TOENOL #3100"(liquid at normal temperature (25°C)) manufactured by Touei Chemical, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from rice oil. Biodiesel I is a mixture of alkyl esters of saturated or unsaturated monovalent fatty acids obtained by esterification of fatty acids as raw materials, which are byproducts of the rice oil production process from rice bran, with methanol.

- Biodiesel J: Product name "TOENOL #3120" (liquid at normal temperature (25°C)) manufactured by Touei Chemical, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms In addition, the saturated or unsaturated monovalent fatty acids are derived from waste edible oil. The product described above is used as the biodiesel J, and since the saturated or unsaturated monovalent fatty acids are derived from waste edible oil at the time of production of said product, as described above, said biodiesel J is also derived from waste edible oil.
- Biodiesel K: Product name "USED COOKING OIL METHYL ESTER (UCOME)" (liquid at normal temperature (25°C)) manufactured by Choutoku Oil and Fat Company, content of alkyl esters of saturated or unsaturated monovalent fatty acids: 96.5% or more; where the alkyl esters of saturated or unsaturated monovalent fatty acids are methyl esters of saturated or unsaturated monovalent fatty acids whose fatty acids have 16 to 18 carbon atoms. In addition, the saturated or unsaturated monovalent fatty acids are derived from waste edible oil. The product described above is used as the biodiesel K, and since the saturated or unsaturated monovalent fatty acids are derived from waste edible oil at the time of production of said product, as described above, said biodiesel K is also derived from waste edible oil.

(Conditioning oil)

The conditioning oils were prepared by mixing the alkyl esters of saturated or unsaturated monovalent fatty acids mentioned above in the following weight ratios, respectively.

- Conditioning oil A: Methyl palmitate/methyl stearate/methyl oleate/methyl linoleate/methyl linolenate = 11.9/5.6/24.7/49.5/8.3
- Conditioning oil B: Methyl palmitate/methyl stearate/methyl oleate/methyl linoleate/methyl linolenate = 44.4/5.1/39.4/10.1/1.0
- Conditioning oil C: Methyl linoleate/methyl behenate = 95/5

The conditioning oils A and B were prepared by mixing each reagent as the composition of alkyl esters of saturated or unsaturated monovalent fatty acids contained when soybean oil and palm oil are methyl-esterified with reference to the composition of fatty acids contained in common soybean oil and palm oil, respectively. Methyl palmitate and methyl stearate are solids at normal temperature (25°C), while conditioning oils A and B are liquids at normal temperature (25°C).

The conditioning Oil C has a composition in which methyl behenate having solid state at normal temperature (25°C) is mixed with methyl linoleate having liquid state at normal temperature (25°C). Conditioning oil C is liquid at normal temperature (25°C).

<Other Ingredients>

- α-Methylstyrene (hereinafter referred to as "αMS" in some cases): Product name "α-Methylstyrene" manufactured by Mitsui Chemicals, Inc.

[Preparation of vulcanizing agent compositions]

Examples 1 to 23 and comparative examples 1 to 11

In each of Examples/Comparative Examples, the sulfur, process oil, and αMS components were put in polyethylene bags at the mixing ratios listed in Table 1, sealed, and mixed by hand rubbing the bag for 10 minutes to prepare the vulcanizing agent composition.

[Electrostatic properties evaluation test (Antistatic properties)]

Electrostatic properties evaluation tests were conducted on the vulcanizing agent compositions to evaluate their antistatic properties.

Approximately 1 g of the vulcanizing agent composition was weighed and placed in a stainless steel container, the lid of the stainless steel container was closed, and the stainless steel container was shaken by hand for 60 seconds. After shaking, the vulcanizing agent composition was placed in the cup of a Faraday cage (made by Nanoseeds Co., product name "VT-Q100") to measure the electrostatically-charging amount (-nC) of the vulcanizing agent composition. The following formula was used to calculate the electrostatic properties per unit weight of the vulcanizing agent composition. The smaller the value of electrostatic properties, the lower the electrostatic properties of the vulcanizing agent composition and the better the antistatic properties. The term "electrostatic properties" is used with the intent of the absolute value of the electrostatically-charging amount per unit weight of the vulcanizing agent composition.

Electrostatic Properties (-nC/g) = Electrostatically Charging amount (-nC)/Input amount of vulcanizing agent composition (g)

The results of the electrostatic properties evaluation test are shown in Table 1. The vulcanizing agent compositions of Examples 1 through 23 had lower values of electrostatics properties than ones of the vulcanizing agent compositions of Comparative Examples 1 through 11, and were sufficiently superior in antistatic properties.

Antistatic properties were evaluated based on the following criteria:

⊙: Electrostatic Properties ≤ 10 (-nC/g) (excellent)
O: 10 (-nC/g) < Electrostatic Properties ≤ 15 (-nC/g) (good)
△: 15 (-nC/g) < Electrostatic Properties ≤ 25 (-nC/g) (no practical problem)
✕: 25 (-nC/g) < Electrostatic Properties (practical problem).

[Ignition test (combustion resistance properties)

Ignition tests was conducted for the vulcanizing agent composition of each of Examples/Comparative Examples to evaluate its resistance to combustion (burning continuity properties).

The resistance to combustion of the vulcanizing agent composition was evaluated by the "small gas flame ignition test" for Class 2 Hazardous Substances as defined in the Fire Defence Law.

The vulcanizing agent composition was molded into a hemispherical shape having about 30 mm wide x 15 mm high. The molded vulcanizing agent composition was placed on an inorganic heat-insulating plate, and a simple ignition device (Tokai Corporation, product name "CR Chuckerman") was used to ignite the vulcanizing agent composition at an angle of approximately 30° to the horizontal plane for 10 seconds. The duration of combustion of the vulcanizing agent composition after the flame was released was measured with a stopwatch. The above operation was repeated 10 times, and the longest combustion duration of the 10 times-combustion durations was considered as the combustion duration of the vulcanizing agent composition. If the combustion duration was less than 10 seconds, it was judged that combustion did not continue, and the ignition test (combustion resistance properties) was rated "⊙". If the combustion duration was 10 seconds or longer, combustion was judged to have continued, and the ignition test (combustion resistance properties) was rated " ✕".

The results of the ignition test were shown in Table 1. The combustion durations of the vulcanizing agent compositions in Examples 1 through 23 were shorter than the combustion durations of the vulcanizing agent compositions in Comparative Examples 3 through 6 and 8, and comparable to the combustion durations s of the vulcanizing agent compositions in Comparative Examples 1 through 2, 7, 9, and 11.

[Method of preparation of rubber compositions]

The mixture obtained by kneading of natural rubber, carbon black, zinc oxide, naphthene oil, and stearic acid in the weight ratio of 100:45:5:5:3 in the order listed was used as a masterbatch. To 158 parts by weight (contains 100 parts by weight of natural rubber) of the master batch, 4.2 parts by weight of each vulcanizing agent composition from Examples 9 to 10 and Comparative Examples 1 to 2 and 1 part by weight of N-t-butyl-2-benzothiazole sulfenamide (manufactured by FUJIFILM Wako Pure Chemicals Co.) were blended and kneaded at a surface temperature of 85°C using a 2-roll mixer (No.536 mixing roll machine manufactured by Mize Testing Machinery Co.) to prepare the rubber composition.

[Mooney Scorch Time]

The rubber composition prepared using the vulcanizing agent composition of each of Examples 9 to 10 and Comparative Examples 1 to 2 was used to measure the Mooney scorch time (T5 (min)) in accordance with the method defined in JIS K 6300-1 using a Mooney Viscometer (made by Toyo Seiki Co., AM-3). Mooney Scorch Time indicates the time of scorch (note: also called initial vulcanization, premature vulcanization, or burn) of the unvulcanized rubber. The smaller this value is, the more likely it is that the rubber composition (compounded rubber) will undergo vulcanization during storage or during processing operations prior to vulcanizing, such as kneading, calendering, extruding, or other operations, resulting in reduced plasticity, increased elasticity, and reduced processability (moldability). As a result, it is determined as follows: the plasticity may decrease, the elasticity may increase, and the processability (moldability) may decrease. Therefore, the higher the value of the Mooney scorch time, the more desirable it is.

The results of the Mooney scorch time measurements are shown in Table 2. The rubber compositions prepared using the vulcanizing agent compositions of Examples 9 to 10 exhibited Mooney scorch times comparable to those of the rubber compositions prepared using the vulcanizing agent compositions of Comparative Examples 1 to 2 and comparable rubber properties.

[Initial and post-aging tensile strength and tensile elongation]

The rubber composition prepared using the vulcanizing agent composition of each of Examples 9 to 10 and Comparative Examples 1 to 2 were used to perform a vulcanization under the conditions of 160°C/15Mpa/10 min using a small press for testing (MP-SNL, made by Toyo Seiki Co.). The tensile strength (MPa) and tensile elongation (%) of each vulcanized rubber composition were measured using an autograph (AGS-X 5kN, manufactured by Shimadzu Corporation), in accordance with the method defined in JIS K 6251, when each rubber composition was left at 23°C for 24 hours (initial) and when each rubber composition was treated at 70°C/ 4 days (after aging) using a gear aging tester ("No. 501-I gear aging tester", manufactured by Mize Testing Machine Co.).

For tensile strength, the higher the value, the better strength. On the other hand, the judgment of tensile elongation differs depending on the application, but for the tensile elongation of rubber for tires for which the vulcanizing agent composition is used as a vulcanizing agent, the higher the value, the better the elongation.

Initial and post-aging tensile strength and tensile elongation measurements were as listed in Table 2. The rubber compositions prepared using the vulcanizing agent compositions of Examples 9 to 10 showed equivalent tensile strength and tensile elongation to those of the rubber compositions prepared using the vulcanizing agent compositions of Comparative Examples 1 to 2, regardless of initial and post-aging, and exhibited equivalent rubber properties.

[Table 1]

| | Sulfur used | Process Oil used | | Components of Vulcanizing Agent Composition (parts by weight) | | | Evaluation Test | |
| --- | --- | --- | --- | --- | --- | --- | --- | --- |
| | kind | kind | Name | Sulfur | Process Oil | αMS | Electrostatic Properties * | Ignition Test |
| Comparative Example 1 | insoluble sulfur | naphthene oil | naphthene oil A | 100 | 25 | 0.125 | 47.9× | ⊙ |
| Comparative Example 2 | | | naphthene oil B | 100 | 25 | 0.125 | 57.9× | ⊙ |
| Comparative Example 3 | | vegetable oils and fats | soybean oil | 100 | 25 | 0.125 | 68.3× | × |
| Comparative Example 4 | | | rape seed oil | 100 | 25 | 0.125 | 60.1× | × |
| Comparative Example 5 | | | flaxseed oil | 100 | 25 | 0.125 | 66.5× | × |
| Comparative Example 6 | | | palm oil | 100 | 25 | 0.125 | 76.6× | × |
| Comparative Example 7 | insoluble sulfur | naphthene oil | naphthene oil A | 100 | 49 | 0.125 | 36.8× | ⊙ |
| Comparative Example 8 | | vegetable oils and fats | soybean oil | 100 | 49 | 0.125 | 29.5× | × |

(continued)

| | Sulfur used | Process Oil used | | Components of Vulcanizing Agent Composition (parts by weight) | | | Evaluation Test | |
|---|---|---|---|---|---|---|---|---|
| | kind | kind | Name | Sulfur | Process Oil | αMS | Electrostatic Properties * | Ignition Test |
| Comparative Example 9 | S$_8$ | naphthene oil | naphthene oil A | 100 | 5.3 | 0.125 | 27.4× | ⊙ |
| Comparative Example 10 | S$_{12}$ | | naphthene oil A | 100 | 5.3 | 0.125 | 40.5× | no evaluation |
| Comparative Example 11 | insoluble sulfur | | naphthene oil A | 100 | 25 | 0 | 55.9× | ⊙ |
| Example 1 | insoluble sulfur | alkyl ester of saturated or unsaturated monovalent fatty acid | methyl oleate | 100 | 25 | 0.125 | 5.40 | ⊙ |
| Example 2 | | | methyl linoleate | 100 | 25 | 0.125 | 4.00 | ⊙ |
| Example 3 | | | methyl linolenate | 100 | 25 | 0.125 | 1.1⊙ | ⊙ |
| Example 4 | | | ethyl oleate | 100 | 25 | 0.125 | 2.50 | ⊙ |
| Example 5 | | | ethyl linoleate | 100 | 25 | 0.125 | 0.2⊙ | ⊙ |
| Example 6 | | | conditioning oil A | 100 | 25 | 0.125 | 0.6⊙ | ⊙ |
| Example 7 | | | conditioning oil B | 100 | 25 | 0.125 | 1.7⊙ | ⊙ |
| Example 8 | | | conditioning oil C | 100 | 25 | 0.125 | 1.20 | ⊙ |
| Example 9 | | | biodiesel A | 100 | 25 | 0.125 | 1.20 | ⊙ |
| Example 10 | | | biodiesel B | 100 | 25 | 0.125 | 14.30 | ⊙ |
| Example 11 | insoluble sulfur | alkyl ester of saturated or unsaturated monovalent fatty acid | biodiesel A | 100 | 49 | 0.125 | 0.0⊙ | ⊙ |
| Example 12 | S$_8$ | | biodiesel A | 100 | 5.3 | 0.125 | 0.4⊙ | ⊙ |
| Example 13 | S$_{12}$ | | biodiesel A | 100 | 5.3 | 0.125 | 2.20 | no evaluation |
| Example 14 | insoluble sulfur | | biodiesel C | 100 | 25 | 0.125 | 0.4⊙ | ⊙ |
| Example 15 | | | biodiesel D | 100 | 25 | 0.125 | 1.0⊙ | ⊙ |
| Example 16 | | | biodiesel E | 100 | 25 | 0.125 | 5.4⊙ | ⊙ |
| Example 17 | | | biodiesel F | 100 | 25 | 0.125 | 2.1⊙ | ⊙ |
| Example 18 | | | biodiesel G | 100 | 25 | 0.125 | 2.30 | ⊙ |
| Example 19 | | | biodiesel H | 100 | 25 | 0.125 | 4.50 | ⊙ |
| Example 20 | | | biodiesel I | 100 | 25 | 0.125 | 1.0⊙ | ⊙ |
| Example 21 | | | biodiesel J | 100 | 25 | 0.125 | 0.8⊙ | ⊙ |
| Example 22 | | | biodiesel K | 100 | 25 | 0.125 | 1.9⊙ | ⊙ |
| Example 23 | | | biodiesel K | 100 | 25 | 0 | 3.7⊙ | ⊙ |

* unit ⌈-nC/g⌋

[Table 2]

| | Mooney Scorch Time T5(min) | Initial | | Post-aging | |
|---|---|---|---|---|---|
| | | Tensile Strength (MPa) | Tensile Elongation (%) | Tensile Strength (MPa) | Tensile Elongation (%) |
| Comparative Example 1 | 25.4 | 26.3 | 465.5 | 19.9 | 328.6 |
| Comparative Example 2 | 25.6 | 25.8 | 453.3 | 20.5 | 332.2 |
| Example 9 | 25.2 | 25.5 | 448.2 | 21.5 | 348.8 |
| Example 10 | 25.3 | 25.7 | 454.6 | 20.8 | 351.7 |

INDUSTRIAL APPLICABILITY

The vulcanizing agent composition and its producing method and the rubber composition and its producing method are useful in the field of vulcanized rubber producing, especially in the field of producing rubber materials that require high hardness, such as rubber for tires, seismic isolation rubber, vibration-damping rubber, conveyor belts, etc.

**Claims**

1.    A vulcanizing agent composition, comprising a sulfur and an alkyl ester of a saturated or unsaturated monovalent fatty acid.

2.    The vulcanizing agent composition according to claim 1, wherein the alkyl ester is one or more compounds selected from the group consisting of methyl esters of saturated or unsaturated monovalent fatty acids, ethyl esters of saturated or unsaturated monovalent fatty acids, isopropyl esters of saturated or unsaturated monovalent fatty acids, n-butyl esters of saturated or unsaturated monovalent fatty acids, isobutyl esters of saturated or unsaturated monovalent fatty acids, 2-ethylhexyl esters of saturated or unsaturated monovalent fatty acids, and mixtures thereof.

3.    The vulcanizing agent composition according to claim 1, wherein the alkyl ester includes an alkyl ester that is in a liquid state at normal temperature.

4.    The vulcanizing agent composition according to claim 1, wherein the fatty acid constituting the alkyl ester is one or more compounds selected from the group consisting of saturated or unsaturated monovalent fatty acids having from 14 to 26 carbon atoms.

5.    The vulcanizing agent composition according to claim 1, wherein the alkyl ester is one or more compounds selected from the group consisting of palmitic acid alkyl esters, stearic acid alkyl esters, oleic acid alkyl esters, linoleic acid alkyl esters, linolenic acid alkyl esters, behenic acid alkyl esters, and mixtures thereof.

6.    The vulcanizing agent composition according to claim 1, wherein the alkyl ester are derived from biodiesel.

7.    The vulcanizing agent composition according to claim 1, wherein the alkyl ester is derived from vegetable oils and fats, animal oils and fats, and/or methyl-esterified products of waste edible oils thereof.

8.    The vulcanizing agent composition according to claim 1, wherein the sulfur is one or more compounds selected from the group consisting of $S_8$ sulfur, cyclododecasulfur ($S_{12}$), insoluble sulfur, and mixtures thereof.

9.    The vulcanizing agent composition according to claim 1, comprising from 1 to 66 parts by weight of the alkyl ester with respect to 100 parts by weight of the sulfur.

10.    The vulcanizing agent composition according to claim 1, further comprising one or more additives selected from vulcanization accelerators, stabilizers, antioxidants, dispersing aids and vulcanization accelerating aids.

11.    A method for producing a vulcanizing agent composition, **characterized by** mixing a sulfur and an alkyl ester of a saturated or unsaturated monovalent fatty acid.

**12.** A vulcanizing agent composition, produced by the production method according to claim 11.

**13.** A rubber composition, comprising the vulcanizing agent composition of any one of claims 1 to 10 and 12, and a rubber component.

**14.** The rubber composition according to claim 13, wherein a content ratio of the vulcanizing agent composition is 0.1 to 1000 parts by weight with respect to 100 parts by weight of the rubber component.

**15.** A method for producing a rubber composition, **characterized by** mixing the vulcanizing agent composition of any one of claims 1 to 10 and 12 and the rubber component.

**16.** A vulcanized rubber of the rubber composition according to claim 13.

**17.** The vulcanized rubber according to claim 16, wherein the vulcanized rubber is a rubber for tires.

**18.** A method for producing a vulcanized rubber, **characterized in that** the rubber composition according to claim 13 is vulcanized.

## INTERNATIONAL SEARCH REPORT

| International application No. |
| --- |
| **PCT/JP2024/020882** |

| | |
| --- | --- |
| **A.    CLASSIFICATION OF SUBJECT MATTER** | |

*C08L 101/00*(2006.01)i; *B60C 1/00*(2006.01)i; *C08K 3/06*(2006.01)i; *C08K 3/011*(2018.01)i; *C08K 5/10*(2006.01)i; *C08L 21/00*(2006.01)i

FI:    C08L101/00; C08K3/011; C08K3/06; C08K5/10; C08L21/00; B60C1/00 Z

According to International Patent Classification (IPC) or to both national classification and IPC

**B.    FIELDS SEARCHED**

Minimum documentation searched (classification system followed by classification symbols)

C08L101/00; B60C1/00; C08K3/06; C08K3/011; C08K5/10; C08L21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2004-027028 A (TOYO TIRE & RUBBER CO., LTD.) 29 January 2004 (2004-01-29) claims, paragraphs [0016]-[0017], [0027]-[0028], example 2 | 13-18 |
| X | JP 2018-127598 A (THE YOKOHAMA RUBBER CO., LTD.) 16 August 2018 (2018-08-16) claims, paragraphs [0018], [0032]-[0033], example 1-6 | 13-18 |
| X | JP 2011-089081 A (THE YOKOHAMA RUBBER CO., LTD.) 06 May 2011 (2011-05-06) claims, example 1-3, comparative examples 1-3 | 13-18 |
| A | WO 2018/189878 A1 (SHIKOKU CHEMICALS CORPORATION) 18 October 2018 (2018-10-18) | 1-18 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 July 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/020882**

| Patent document cited in search report | | | Publication date (day/month/year) | Patent family member(s) | Publication date (day/month/year) |
|---|---|---|---|---|---|
| JP | 2004-027028 | A | 29 January 2004 | (Family: none) | |
| JP | 2018-127598 | A | 16 August 2018 | (Family: none) | |
| JP | 2011-089081 | A | 06 May 2011 | (Family: none) | |
| WO | 2018/189878 | A1 | 18 October 2018 | (Family: none) | |

Form PCT/ISA/210 (patent family annex) (July 2022)

**REFERENCES CITED IN THE DESCRIPTION**

**Patent documents cited in the description**

- WO 2018189878 A
- JP 2003268240 A
- JP 2003313367 A
- JP 2019512443 A